# FASCICULE DE BREVET EUROPEEN

(11) **EP 1 613 709 B1**
(45) Date de publication et mention de la délivrance du brevet: **04.07.2012**
(21) Numéro de dépôt: 04742509.5
(22) Date de dépôt: 15.04.2004
(51) Int. Cl.: C09K 3/14, B24D 3/14, C04B 35/107

(54) **GRAINS CERAMIQUES FONDUS A BASE D'ALUMINE ET DE MAGNESIE**
GESCHMOLZENES KORN AUF DER BASIS VON ALUMINIUM- UND MAGNESIUMOXID
ALUMINIUM- AND MAGNESIUM-BASED MOLTEN CERAMIC GRAINS

(30) Priorité: 17.04.2003 FR 0304820
(43) Date de publication de la demande: 11.01.2006
(73) Titulaire: Saint-Gobain Centre de Recherches et d'Etudes Européen, 92400 Courbevoie (FR)
(72) Inventeur: MARLIN, Samuel, F-13750 Plan d'Orgon (FR)
(74) Mandataire: Sartorius, Jérome
(86) Numéro de dépôt international: PCT/FR2004/000927
(87) Numéro de publication internationale: WO 2004/094554

(56) Documents cités:
- FR-A- 2 642 694
- US-A- 4 157 898

## Description

L'invention se rapporte à des grains céramiques à base d'alumine et obtenus par fusion.

Les grains céramiques alumineux sont, entre autres applications, utiles pour la fabrication d'outils abrasifs. On classe généralement les outils abrasifs selon le mode de mise en forme des grains céramiques qui les constituent : abrasifs libres (utilisation des grains en projection ou en suspension, sans support), abrasifs appliqués (grains appliqués sur un support de type toiles ou papiers, les grains étant classiquement disposés sur plusieurs couches) et abrasifs agglomérés (grains agglomérés sous forme de meules circulaires, de bâtons, etc.).

Dans la cas des outils abrasifs agglomérés, les grains abrasifs sont pressés avec un liant organique ou vitreux. Les liants vitreux sont généralement constitués d'oxydes, essentiellement silicatés. Les grains agglomérés doivent présenter eux-mêmes de bonnes propriétés mécaniques à l'abrasion, en particulier présenter une bonne ténacité. Ils doivent en outre pouvoir être fixés solidement au liant (solidité de l'interface).

On trouve aujourd'hui différentes familles de grains céramiques permettant de couvrir toutes ces applications avec des performances variées. On distingue en particulier deux grandes familles selon que les grains sont obtenus par voie sol-gel ou par fusion.

Le procédé par voie sol-gel, tel que décrit par exemple dans EP 1 228 018 (USP 6,287,353) permet de fabriquer des grains à structure cristalline très fine, classiquement submicronique, qui leur confère une excellente efficacité de coupe et une longue durée de vie. La productivité du procédé sol-gel est cependant faible et entraîne des coûts de fabrication élevés.

Les grains fondus obtenus par fusion des matières premières ou « grains fondus » ont classiquement des structures cristallines beaucoup plus grossières et offrent une efficacité de coupe et une durée de vie moindres. Des grains fondus contenant principalement de l'alumine sont par exemple décrits dans US 4,157,898. L'avantage principal de ces grains est leur faible coût de fabrication.

Les grains fondus content out, comme base, des cristaux de corindon sont décrites dans FR 2642694.

La composition des grains est importante, mais le procédé de fabrication est également déterminant sur les performances. Ainsi, pour une composition donnée, une microstructure obtenue par voie sol-gel et offrant des propriétés intéressantes ne peut pas facilement être obtenue par fusion.

Le tableau 1 suivant fournit, à titre de comparaison, les résultats à un test de résistance à la fracturation (test A), décrit plus en détail dans la suite de la description, pour deux grains abrasifs à forte teneur en alumine de l'art antérieur. Ces deux grains sont fabriqués et commercialisés par Saint-Gobain Industrial Ceramics. Le grain de corindon blanc est obtenu par fusion et le Cerpass par voie sol-gel. Comme le montre le tableau 1, les compositions chimiques sont très proches (le complément est l'alumine). Mais, le corindon blanc donne un résultat de 119% au test A alors que le Cerpass donne 375%.

**Tableau 1**

| | SiO₂ | TiO₂ | Na₂O | MgO | CaO | Fe₂O₃ | Cr₂O₃ | Test A |
|---|---|---|---|---|---|---|---|---|
| Corindon blanc | <0.1% | < 0,05% | 0,27% | < 0,02% | < 0,02% | 0,02% | - | 119 |
| Cerpass | 0,061% | 0,096% | < 0,03% | 0,009% | 0,014% | - | 0,003% | 375 |

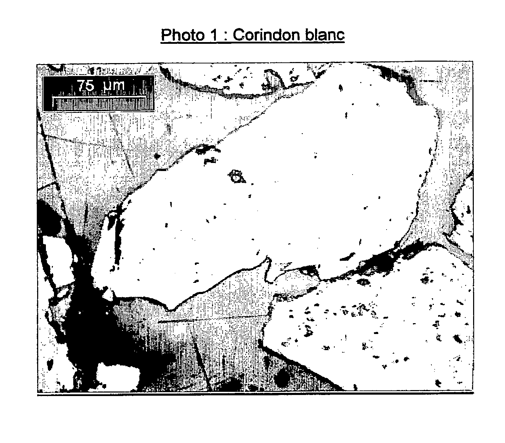

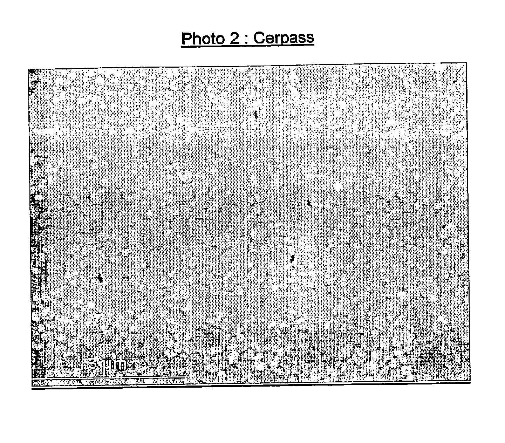

Les photos 1 et 2 en annexes représentent, en coupe, des grains de corindon blanc et de Cerpass, respectivement.

Il existe donc un besoin pour des grains alumineux fondus offrant des performances en termes de durée de vie et d'efficacité de coupe meilleures que celles des grains alumineux fondus actuels, mais pouvant être fabriqués à un coût significativement inférieur à celui des grains alumineux obtenus par voie sol-gel.

La présente invention vise à satisfaire ce besoin.

Selon l'invention, on atteint ce but au moyen de grains fondus selon la revendication 1.

Comme nous le verrons plus loin, de tels grains, fabriqués par fusion, sont peu coûteux et présentent néanmoins une longue durée de vie et une excellente efficacité de coupe.

Sauf mention contraire, les pourcentages utilisés dans la présente demande se réfèrent toujours à des pourcentages en poids sur la base des oxydes.

Selon d'autres caractéristiques préférées de l'invention :
- la teneur minimale en magnésie (MgO), en pourcentage en poids sur la base des oxydes, est de 2,3 %, de préférence de 2,45 % et la teneur maximale en MgO, en pourcentage en poids sur la base des oxydes, est de 4 %, de préférence de 2,5% ;
- la teneur maximale en Na₂O, en pourcentage en poids sur la base des oxydes, est de 0,1 %, de préférence de 0,05 % ;

L'invention concerne également un procédé de fabrication de grains céramiques comportant les étapes successives suivantes :
a) préparation d'un mélange de matières premières ayant la composition chimique pondérale moyenne, en pourcentage en poids sur la base des oxydes, suivante :
   Al₂O₃ : 93 % à 97,5 %
   MgO : 2,2 à 4 %,
   SiO₂ : < 0,1 %
   Autres impuretés : < 0,4 %
b) fusion en four à arc électrique, au moyen d'un arc court et avec une énergie de fusion avant coulée comprise entre 2000 et 2500 kWh par tonne dudit mélange de matières premières, dans des conditions réductrices déterminées de manière que le produit obtenu après l'étape c) suivante comporte une teneur en carbone maximale de 200 ppm ;
c) coulée et refroidissement par trempe, de préférence de manière que le liquide fondu soit entièrement solidifié en moins de 3 minutes ;
d) broyage du produit refroidi;
e) tamisage des grains broyés et sélection des grains tamisés de manière à sélectionner les grains ayant un grit inférieur ou égal à F50 selon la norme standard FEPA 42-GB-1984.

Selon d'autres caractéristiques préférées du procédé selon l'invention,
- ledit mélange de matières premières comporte en outre entre 0,8 et 5,5%, de préférence 2,5 %, en masse de carbone et/ou entre 0,8 et 5,5%, de préférence 2,5 %, en masse de copeaux d'aluminium métallique ;
- ledit mélange de matières premières comporte, en pourcentage en poids sur la base des oxydes, une teneur minimale en magnésie (MgO) de 2,3 %, de préférence de 2,45 %, et une teneur maximale en MgO de 4 % de préférence de 2,5%.
- le procédé comporte, après l'étape d), une étape de calcination sous atmosphère oxydante à une température supérieure à 1250°C, de préférence supérieure à 1350°C, de préférence encore supérieure à 1400°C, la température de calcination étant de préférence maintenue pendant une durée d'au moins 30 minutes ;

L'invention concerne enfin l'utilisation des grains selon l'invention et/ou des grains obtenus au moyen du procédé selon l'invention dans des produits abrasifs, de préférence dans des produits agglomérés ou dans des produits appliqués.

Les exemples non limitatifs suivants sont donnés dans le but d'illustrer l'invention.

Les produits donnés en exemples ont été préparés à partir d'un mélange de départ contenant les matières premières suivantes :
- Alumine de type AR75 commercialisée par la société Pechiney et contenant en moyenne 99 % d'Al₂O₃.
- Magnésie NedMag ® contenant environ 98 % de MgO.

La silice ainsi que l'oxyde de sodium sont connus pour être néfastes et leurs teneurs respectives doivent être limitées à des traces (<0,1%) introduites à titre d'impuretés dans les matières premières. En effet, la présence de silice conduit à la formation d'une phase vitreuse dont l'influence sur les propriétés abrasives ainsi que sur la dureté du grain est néfaste. La présence d'oxyde de sodium, même à de faibles teneurs, conduit quant à elle à la formation d'alumine bêta. Or cette forme cristalline de l'alumine diminue les propriétés abrasives des grains.

La teneur des autres impuretés telles CaO, TiO₂, Fe₂O₃ ou Cr₂O₃ ne doit pas dépasser 0,3%.

Le mélange de départ a été fondu selon un procédé classique de fusion en four à arc en milieu réducteur, avec ajout de 2,5 % en masse de carbone, par exemple de coke de pétrole, de brai ou de charbon, et de 2,5 % en masse de copeaux d'aluminium métallique. L'arc électrique était court et l'énergie avant coulée comprise entre 2000 et 2500 kWh par tonne de mélange de matières premières de départ. La tension nécessaire pour l'obtention d'un arc court dépend de nombreux paramètres, bien maîtrisés par l'homme du métier, tels que la taille du four, le nombre et la taille des électrodes.

Le bain des matières premières fondues a ensuite été refroidi rapidement pour favoriser l'obtention de structures fines et orientées, au moyen de dispositifs de coulée entre plaques minces métalliques tels que celui présenté dans le brevet US-A-3,993,119.

Le matériau fondu et refroidi, ou « crude », a ensuite été broyé, par exemple sur broyeurs à rouleaux, puis tamisé et classifié en séries de distributions granulométriques (« numéro » ou « grits ») selon la norme de la Fédération Européenne des Fabricants de Produits Abrasifs, norme FEPA Standard 42-GB-1984.

Selon l'invention, pour améliorer la résistance à l'impact et la performance abrasive des grains obtenus, les grains ont ensuite subi une étape de traitement thermique. De préférence, le traitement thermique comprend une calcination sous atmosphère oxydante, de préférence sous air, à une température supérieure à 1250°C, de préférence supérieure à 1350°C, de préférence encore supérieure à 1400°C, pendant une durée d'au moins 2 minutes, de préférence d'au moins 5 minutes, de préférence encore d'au moins 30 minutes.

Pour les exemples, les grains ont été calcinés sous air à diverses températures pendant des durées variables. Ces paramètres opératoires figurent dans le tableau 2 ci-dessous.

L'analyse chimique des produits obtenus est donnée dans le tableau 2. Il s'agit d'une analyse chimique moyenne, donnée en pourcentage en poids.

L'analyse chimique, hors teneur en carbone, est obtenue par fluorescence des rayons X.

Le taux de carbone, qui reflète l'état d'oxydo-réduction, est mesuré par absorption infrarouge. Pour ce faire, on broie l'échantillon après séparation magnétique, dans un bol de broyage exempt de carbone (par exemple en alumine-zircone-silice fondue), jusqu'à l'obtention d'une poudre passant au tamis 160 µm. L'échantillon ainsi préparé est analysé avec un appareil LECO ®, modèle CS300.

Le grain de référence est un grain alumineux fondu, élaboré dans des conditions réductrices, et commercialisé sous l'appellation 32AII par la société Saint-Gobain Industrial Ceramics. Son analyse chimique typique révèle 99,4 % d'Al₂O₃, 0,4 % de TiO₂, moins de 0,1 % de Na₂O et moins de 0,02 % de SiO₂.

Pour caractériser leurs propriétés mécaniques, les grains ont été soumis à un test de résistance à la fracturation (test A). Ce test vise à déterminer la fraction de grains survivants d'une tranche granulométrique donnée après une sollicitation dans un bol de broyage en acier.

On utilise un broyeur tournant AUREC type T100 qui met en mouvement un bol cylindrique creux contenant les grains ainsi qu'un anneau et un palet. Le bol est en acier nuance Z200C12 et a un diamètre intérieur de 140 mm et une hauteur de 18 mm. Le palet est cylindrique et creux (diamètre 75 mm, hauteur 46 mm et épaisseur de paroi de 10 mm). L'anneau a un diamètre intérieur de 95 mm et extérieur de 120 mm. Le palet et l'anneau sont en acier de la même nuance que le bol.

Les grains sont tout d'abord tamisés et classés selon les fractions suivantes à tester:
710/850 µm pour représenter le grain de numéro F24,
500/600 µm pour représenter le grain de numéro F36,
300/355 µm pour représenter le grain de numéro F54,
250/300 µm pour représenter le grain de numéro F60
180/212 µm pour représenter le grain de numéro F80,
106/125 µm pour représenter le grain de numéro F120,

Les grains sont ensuite déferrés par séparation magnétique. Le bol est nettoyé à l'air comprimé avant que l'on y introduise un échantillon de 25 grammes de grains. Le broyeur est mis en route à sa vitesse nominale (1400 tours/min) pendant 5 secondes. L'échantillon est ensuite extrait à l'aide d'un pinceau (N°50). On analyse alors sa répartition granulométrique en l'introduisant sur une série de tamis à l'aide d'une tamiseuse ROTAP, pendant 5 minutes. Puis on mesure la masse de grains ne passant pas le tamis d'ouverture 425 µm. Cette masse, donnée en pourcentage par rapport à la masse restante dans les mêmes conditions pour l'échantillon de référence, correspond au résultat du test A.

On considère que la valeur obtenue lors du test A doit être supérieure à 190, (c'est-à-dire que la masse de grains ne passant pas le tamis d'ouverture 425 µm est au moins 1,9 fois supérieure à celle de la référence), de préférence doit être supérieure à 300, (c'est-à-dire que la masse de grains ne passant pas le tamis d'ouverture 425 µm est au moins 3 fois supérieure à celle de la référence), pour que l'effet soit suffisamment marqué pour que ces grains puisse être utilisés dans des produits abrasifs.

Pour évaluer l'efficacité de coupe des grains obtenus, nous avons mis en oeuvre le test B suivant.

Dans ce test, la préparation des échantillons est identique à celle du test A. On utilise le même appareillage et le même mode opératoire. Après tamisage de l'échantillon testé, on réintroduit l'ensemble de l'échantillon pendant 145 secondes dans le broyeur. L'échantillon est ensuite extrait à l'aide d'un pinceau dur et on mesure le taux de fer par diffraction des rayons X. Cette valeur, donnée en pourcentage par rapport à la valeur obtenue dans le même test pour l'échantillon de référence, est le résultat du test B.

On considère que la valeur obtenue lors du test B doit être supérieure ou égale à 70 % pour que l'efficacité de coupe soit satisfaisante.

**Tableau 2**

| | **Traitement thermique (calcination)** | | **Composition en % en poids** | | | | | **Etat redox** | **Taille Grains (Grit)** | | |
|---|---|---|---|---|---|---|---|---|---|---|---|
| **Ex.** | **Temp. (°C)** | **Durée (minutes)** | **% Al₂O₃** | **% MgO** | **% SiO₂** | **% Na₂O** | **Autres impur.** | **C (ppm)** | | **Test A** | **Test B** |
| 1* | 1400 | 35 | > 98,68 | 0,87 | < 0,1 | < 0,05 | < 0,3 | 155 | F24 | 162 | 89 |
| 2* | 1400 | 35 | > 98,2 | 1,35 | < 0,1 | < 0,05 | < 0,3 | 113 | F24 | 220 | 67 |
| 3* | 1300 | 60 | > 98 | 1,55 | < 0,1 | < 0,05 | < 0,3 | 74 | F24 | 303 | 85 |
| 4* | 1300 | 60 | > 97,94 | 1,61 | < 0,1 | < 0,05 | < 0,3 | 83 | F24 | 336 | 83 |
| 5* | 1400 | 120 | > 97,78 | 1,75 | < 0,1 | 0,07 | < 0,3 | | F24 | 377 | 88 |
| 6 | 1300 | 120 | > 97,08 | 2,47 | < 0,1 | < 0,05 | < 0,3 | 175 | F24 | 368 | 98 |
| 7 | 1400 | 5 | > 97,08 | 2,47 | < 0,1 | < 0,05 | < 0,3 | 165 | F24 | 305 | 109 |
| 8 | 1400 | 30 | > 97,08 | 2,47 | < 0,1 | <0,05 | < 0,3 | 165 | F24 | 326 | 100 |
| 9 | 1400 | 45 | > 97,08 | 2,47 | < 0,1 | < 0,05 | < 0,3 | 170 | F24 | 382 | 93 |
| 10 | 1400 | 120 | > 97,08 | 2,47 | < 0,1 | < 0,05 | < 0,3 | 168 | F24 | 349 | 98 |
| 11 | 1400 | 600 | > 97,08 | 2,47 | < 0,1 | < 0,05 | < 0,3 | 165 | F24 | 351 | 100 |
| 12 | 1400 | 120 | > 96,85 | 2,68 | < 0,1 | 0,07 | < 0,3 | | F24 | 388 | 85 |
| 13 | 1400 | 35 | > 96,26 | 3,39 | < 0,1 | < 0,05 | < 0,2 | | F24 | 303 | |
| 14* | 1400 | 35 | > 96,26 | 3,39 | < 0,1 | < 0,05 | < 0,2 | | F54 | 158 | |
| 15* | 1400 | 40 | > 96,26 | 3,39 | < 0,1 | < 0,05 | < 0,2 | | F80 | 106 | |
| 16* | 1400 | 45 | > 96,03 | 3,6 | < 0,1 | 0,07 | < 0,2 | 315 | F36 | 206 | 67 |
| 17* | 1400 | 50 | > 95,89 | 3,76 | < 0,1 | < 0,05 | < 0,2 | 220 | F36 | 275 | 70 |
| 18 | 1400 | 45 | > 95,89 | 3,76 | < 0,1 | < 0,05 | < 0,2 | 180 | F36 | 193 | 105 |
| 19 | 1300 | 120 | > 95,67 | 3,88 | < 0,1 | < 0,05 | < 0,3 | 90 | F24 | 274 | 92 |
| 20 | 1400 | 5 | > 95,67 | 3,88 | < 0,1 | < 0,05 | < 0,3 | 80 | F24 | 282 | 94 |
| 21 | 1400 | 30 | > 95,67 | 3,88 | < 0,1 | < 0,05 | < 0,3 | 70 | F24 | 314 | 97 |
| 22 | 1400 | 120 | > 95,67 | 3,88 | < 0,1 | < 0,05 | < 0,3 | 72 | F24 | 333 | 92 |
| 23 | 1400 | 45 | > 95,77 | 3,88 | < 0,1 | < 0,05 | < 0,2 | | F24 | 324 | 82 |
| 24* | 1400 | 45 | > 95,77 | 3,88 | < 0,1 | < 0,05 | < 0,2 | | F60 | 134 | 68 |
| 25 | 1400 | 60 | > 95,69 | 3,95 | < 0,1 | 0,06 | < 0,2 | | F36 | 334 | 83 |
| 26* | 1400 | 60 | > 95,69 | 3,95 | < 0,1 | 0,06 | < 0,2 | | F60 | 137 | 64 |
| 27* | 1400 | 60 | > 95,69 | 3,95 | <0.1 | 0,06 | < 0,2 | | F120 | 99 | 67 |
| 28* | 1400 | 20 | > 95,69 | 3,95 | < 0,1 | 0,06 | < 0,2 | | F60 | 98 | |
| 29 | 1300 | 20 | > 95,69 | 3,95 | < 0,1 | 0,06 | < 0,2 | | F60 | 97 | |
| 30* | 1400 | 35 | > 95,11 | 4,54 | < 0,1 | < 0,05 | < 0,2 | 75 | F24 | 320 | 74 |
| 31* | 1400 | 35 | > 94,41 | 5,24 | < 0,1 | < 0,05 | < 0,2 | | F24 | 316 | 73 |
| 32* | 1400 | 45 | > 93,53 | 6,12 | < 0,1 | < 0,05 | < 0,2 | 93 | F24 | 309 | 71 |
| 33* | 1400 | 45 | > 93,06 | 6,59 | < 0,1 | < 0,05 | < 0,2 | 87 | F24 | 305 | 62 |
| 3 | 1400 | 120 | > 92,54 | 7,01 | < 0,1 | < 0,05 | < 0,3 | 106 | F24 | 290 | 51 |

| | | | | | | | | | | | |
|---|---|---|---|---|---|---|---|---|---|---|---|
| * Les exemples comparatifs. | | | | | | | | | | | |

Les exemples du tableau 2 permettent de constater qu'une teneur en MgO supérieure à 1,5 % est nécessaire pour que la résistance à la fracturation des grains soit améliorée. Le tableau 2 indique également qu'une teneur en MgO supérieure à 6,5 % dégrade les qualités du grain obtenu, en particulier son efficacité de coupe, mais aussi la résistance à la fracturation est elle aussi dégradée.

La teneur minimale en MgO est de 2,2 %, de préférence encore de 2,45 %.

La teneur maximale en MgO est de 4 %, de préférence encore de 2,5 %.

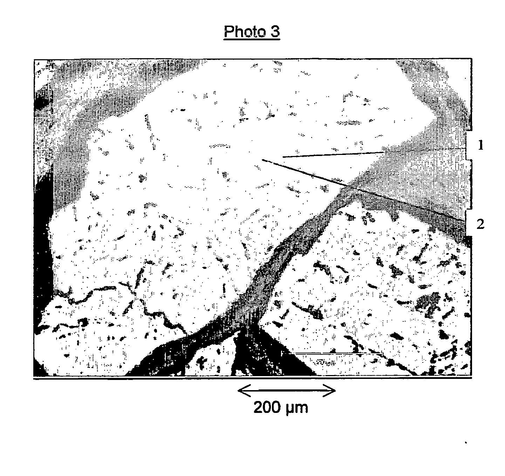

Des analyses complémentaires (Microscope Electronique à Balayage) pour étudier les phases cristallines révèlent que les produits de l'invention sont constitués de cristaux de corindon 1 (alumine alpha) entourés d'une phase spinelle MgO-Al₂O₃ non stoechiométrique 2 (voir photo 3 annexée). La taille moyenne des cristaux de corindon est de 18 à 20 µm. Typiquement, 90 % des cristaux ont une taille supérieure à 9 µm et 90 % ont une taille inférieure à 27 µm. 100 % des cristaux ont une taille supérieure à 5 µm.

La comparaison des exemples 13 et 14, ou des exemples 23 et 24, ou des exemples 26, 27 et 28, illustre l'influence de la taille des grains. Les grains résistent d'autant mieux à la fracturation et présente une capacité de coupe d'autant meilleure qu'ils sont gros, c'est-à-dire plus leur « grit » est petit.

Pour les applications très exigeantes, par exemple pour une utilisation dans un outil de meulage à forte pression, on sélectionne de préférence les grains les plus gros, de préférence les grains grossiers ayant un grit inférieur au grit F50, de préférence encore inférieur au grit F36.

L'étape de fusion dans des conditions réductrices du procédé selon l'invention génère des produits ayant une teneur en carbone faible. procédé est conduit, selon des techniques classiques pour l'homme du métier, de manière que le teneur en carbone est inférieure à 200 ppm, de préférence encore inférieure à 180 ppm.

Avantageusement, la faible teneur en carbone des grains selon l'invention les rend particulièrement adaptés pour une utilisation dans des abrasifs agglomérés.

Bien entendu, la présente invention n'est pas limitée aux modes de réalisation décrits et représentés ci-dessus, fournis à titre illustratif et non limitatif.

## Revendications

1. Grains céramiques fondus ayant un grit inférieur au grit F50 selon la norme Standard FEPA 42-GB-1984 et présentant la composition chimique pondérale moyenne, en pourcentage en poids sur la base des oxydes, suivante :
Al₂O₃ : ≥ 93 %
MgO : 2,2 à 4%,
SiO₂ : < 0,1 %
Autres impuretés : < 0,4 %,
la teneur maximale en carbone étant de 200 ppm.

2. Grains selon la revendication 1, **caractérisés en ce que** la teneur minimale en MgO, en pourcentage en poids sur la base des oxydes, est de 2,3 %.

3. Grains selon la revendication 1, **caractérisés en ce que** la teneur minimale en MgO, en pourcentage en poids sur la base des oxydes, est de 2,45 %.

4. Grains selon l'une quelconque des revendications 1 à 3, **caractérisés en ce que** la teneur maximale en MgO, en pourcentage en poids sur la base des oxydes, est de 2,5 %.

5. Grains selon l'une quelconque des revendications précédentes, **caractérisés en ce que** la teneur maximale en Na₂O en pourcentage en poids sur la base des oxydes, est de 0,1 %, de préférence de 0,05 %.

6. Grains selon l'une quelconque des revendications précédentes, **caractérisés en ce qu'**ils sont constitués de cristaux de corindon entourés d'une phase spinelle MgO-Al₂O₃ non stoechiométrique.

7. Grains selon la revendication 6, **caractérisés en ce que** la taille moyenne desdits cristaux de corindon est comprise entre 18 et 20 µm.

8. Grains selon l'une quelconque des revendications 6 et 7, **caractérisés en ce que** 90 % desdits cristaux de corindon ont une taille supérieure à 9 µm et/ou 90 % ont une taille inférieure à 27 µm.

9. Grains selon l'une quelconque des revendications 6 à 8, **caractérisés en ce que** 100 % desdits cristaux de corindon ont une taille supérieure à 5 µm.

10. Procédé de fabrication de grains céramiques comportant les étapes successives suivantes :
a) préparation d'un mélange de matières premières ayant la composition chimique pondérale moyenne, en pourcentage en poids sur la base des oxydes, suivante :
Al₂O₃: 93 % à 97,5 %
MgO: 2,2 à 4%,
SiO₂: <0,1 %
Autres impuretés: < 0,4 %
b) fusion en four à arc électrique, au moyen d'un arc court et avec une énergie avant coulée comprise entre 2000 et 2500 kWh par tonne dudit mélange de matières premières, dans des conditions réductrices déterminées de manière que le produit obtenu après l'étape c) suivante comporte une teneur en carbone maximale de 200 ppm ;
c) coulée et refroidissement par trempe ;
d) broyage du produit refroidi;
e) tamisage des grains broyés et sélection des grains tamisés de maniére à sélectionner les grains ayant un grit inférieur ou égal à F50 selon la norme standard FEPA 42-GB-1984.

11. Procédé selon la revendication 10, **caractérisé en ce que** ledit mélange de matières premières comporte en outre entre 0,8 et 5,5 % en masse de carbone et/ou entre 0,8 et 5,5 % en masse de copeaux d'aluminium métallique.

12. Procédé selon l'une quelconque des revendications 10 et 11, **caractérisé en ce qu'**il comporte, après l'étape d), une étape de calcination sous atmosphère oxydante à une température supérieure à 1250°C.

13. Procédé selon la revendication 12, **caractérisé en ce que** la température de calcination est supérieure à 1350°C.

14. Procédé selon la revendication 12, **caractérisé en ce que** la température de calcination est supérieure à 1400°C.

15. Procédé selon l'une quelconque des revendications 12 à 14, **caractérisé en ce que** la température de calcination est maintenue pendant une durée d'au moins 5 minutes.

16. Utilisation des grains selon l'une quelconque des revendications 1 à 9 et/ou des grains obtenus au moyen du procédé selon l'une quelconque des revendications 10 à 15, dans des produits abrasifs.

17. Utilisation des grains selon la revendication 16, **caractérisé en ce que** lesdits produits abrasifs sont des produits agglomérés ou des produits appliqués

## Claims

1. Fused ceramic grains having a grit number of less than the grit F50 according to the FEPA Standard 42-GB-1984, and having the following average chemical composition by weight, in percentages by weight on the basis of the oxides:
Al₂O₃: ≥ 93 %
MgO: 2.2 to 4%;
SiO₂: < 0.1%;
other impurities: < 0.4%,
the maximum carbon content bring 200 ppm.

2. Grains according to claim 1, **characterized in that** the minimum MgO content, as a percentage by weight on the basis of the oxides, is 2.3%.

3. Grains according to claim 1, **characterized in that** the minimum MgO content, as a percentage by weight on the basis of the oxides, is 2.45%.

4. Grains according to any one of claims 1 to 3, **characterized in that** the maximum MgO content, as a percentage by weight on the basis of the oxides, is 2.5%.

5. Grains according to any one of the preceding claims, **characterized in that** the maximum Na₂O content, as a percentage by weight on the basis of the oxides, is 0.1%, preferably 0.05%.

6. Grains according to any one of the preceding claims, **characterized in that** they consist of corundum crystals surrounded by a nonstoichiometric MgO-Al₂O₃ spinel phrase.

7. Grains according to claim 6, **characterized in that** the mean size of said corundum crystals is between 18 and 20 µm.

8. Grains according to any one of claims 6 and 7, **characterized in that** 90% of said corundum crystals have a size of greater than 9 µm and/or 90% have a size of less than 27 µm.

9. Grains according to any one of claims 6 to 8, **characterized in that** 100% of said corundum crystals have a size of greater than 5 µm.

10. Process for manufacturing ceramic grains, which comprises the following successive steps:
a) preparation of a mixture of raw materials having the following average chemical composition by weight, as percentages by weight on the basis of the oxides:
Al₂O₃: 93% to 97.5%;
MgO: 2.2 to 4%;
SiO₂: < 0.1%;
other impurities: < 0.4%;
b) fusion, in an electric arc furnace, by means of a short arc and with a melting energy before casting between 2000 and 2500 kWh per ton of said mixture of raw materials, under defined reducing conditions so that the product obtained after the following step c) has a maximum carbon content of 200 ppm;
c) casting and quench cooling;
d) grinding of the cooled product,
e) screening the ground grains and selecting the screened grains, so as to select the grains having a grit number of F50 or less according to the FEPA Standard 42-GB-1984.

11. Process according to claims 10, **characterized in that** said mixture of raw materials also contains between 0.8 to 5.5 wt% carbon and/or between 0.8 and 5.5 wt% aluminum metal chips.

12. Process according to any one of claims 10 to 11, **characterized in that** it includes, after step d), a calcination step in an oxidizing atmosphere at a temperature above 1250°C.

13. Process according to claim 12, **characterized in that** the calcination temperature is above 1350°C.

14. Process according to claim 12, **characterized in that** the calcination temperature is above 1400°C.

15. Process according to any one of claims 12 to 14, **characterized in that** the calcination temperature is maintained for a time of at least 5 minutes.

16. Use of the grains according to any one of claims 1 to 9 and/or the grains obtained with a process according to any one of claims 10 to 15 in abrasive products.

17. Use of the grains according to claim 16, **characterized in that** said products are bonded products or coated products.

## Patentansprüche

1. Geschmolzene keramische Körner mit einer Korngröße, die kleiner ist als die Korngröße F 50 nach der Standardnorm FEPA 42-GB-1984, die eine mittlere gewichtsmäßig chemische Zusammensetzung in Gewichtsprozent auf Oxydbasis wie folgt aufweisen:
Al₂O₃ ≥ 93%
MgO: 2,2 bis 4%
SiO₂: < 0,1%
Andere Verunreinigungen: < 0,4%,
wobei der maximale Kohlenstoffgehalt 200 ppm ist.

2. Körner nach Anspruch 1,
**dadurch gekennzeichnet,**
**dass** der minimale Gehalt an MgO in Gewichtsprozent auf Oxydbasis 2,3% ist.

3. Körner nach Anspruch 1,
**dadurch gekennzeichnet,**
**dass** der minimale Gehalt an MgO in Gewichtsprozent auf Oxydbasis 2,45% beträgt.

4. Körner nach einem der Ansprüche 1 bis 3,
**dadurch gekennzeichnet,**
**dass** der Maximalgehalt an MgO in Gewichtsprozent auf Oxydbasis 2,5% ist.

5. Körner nach einem der vorhergehenden Ansprüche,
**dadurch gekennzeichnet,**
**dass** der maximale Gehalt an Na₂O in Gewichtsprozent auf Oxydbasis 0,1 %, bevorzugt 0,05% beträgt.

6. Körner nach einem der vorhergehenden Ansprüche,
**dadurch gekennzeichnet,**
**dass** sie aus Korund-Kristallen gebildet sind, welche von einer Spinell-Phase MgO- Al₂O₃ umgeben sind, die licht stoechiometrisch ist.

7. Körner nach Anspruch 6,
**dadurch gekennzeichnet,**
**dass** die mittlere Größe dieser Korund-Kristalle zwischen 18 und 20µm liegt.

8. Körner nach einem der Ansprüche 6 und 7,
**dadurch gekennzeichnet,**
**dass** 90% der Korund-Kristalle eine Größe aufweisen, die oberhalb von 9µm liegt und/oder 90% eine Größe, die unterhalb von 27µm liegt.

9. Körner nach einem der Ansprüche 6 bis 8,
**dadurch gekennzeichnet,**
**dass** 100% der Korund-Kristalle eine Größe aufweisen, die oberhalb von 5µm liegt.

10. Verfahren zur Herstellung von keramischen Körnern bestehend aus den aufeinanderfolgenden Verfahrensschritten wie folgt:
a) Zubereitung einer Mischung von Primär-Materialien, welche die folgende gewichtsgemittelte chemische Zusammensetzung in Gewichtsprozent auf Oxydbasis aufweist:
Al₂O₃: 93% bis 97,5 %
MgO: 2,2 bis 4 %
SiO₂: < 0,1%
Andere Verunreinigungen: < 0,4 %
b) Schmelzen in einem Elektroofen mittels eines kurzen elektrischen Bogens und mit einer Energie vor dem Abstich zwischen 2000 und 2500 kWh pro Tonne der Mischung aus den Primär-Materialien, unter reduzierenden Bedingungen, die derart festgelegt sind, dass das erhaltene Produkt nach dem Schritt c) einen Kohlenstoffgehalt von maximal 200 ppm aufweist;
c) Gießen und Erkalten durch Abschrecken;
d) Zermahlen des erkalteten Produkts,
e) Sieben der zermahlenen Körner und Selektion der gesiebten Körner derart, dass die Körner ausgewählt werden, die ein Korngröße aufweisen, die kleiner oder gleich ist von F 50 nach der Standardnorm FEPA 42-GB-1984.

11. Verfahren nach Anspruch 10,
**dadurch gekennzeichnet,**
**dass** die Mischung aus den Primär-Materialien darüber hinaus zwischen 0.8 und 5,5 % Masse an Kohlenstoff und/oder zwischen 0,8 und 5,5 % Masse an metallischen Aluminiumspänen beinhalten.

12. Verfahren nach einem der Ansprüche 10 und 11,
**dadurch gekennzeichnet,**
**dass** es nach dem Schritt d) einen Kalzinationsschritt unter oxidierender Atmosphäre bei einer Temperatur oberhalb von 1250 C° beinhaltet.

13. Verfahren nach Anspruch 12,
**dadurch gekennzeichnet,**
**dass** die Kalzinationstemperatur größer als 1350 C° ist.

14. Verfahren nach Anspruch 12,
**dadurch gekennzeichnet,**
**dass** die Kalzinationstemperatur oberhalb von 1400 C° liegt.

15. Verfahren nach einem der Ansprüche 12 bis 14,
**dadurch gekennzeichnet,**
**dass** die Kalzinationstemperatur während einer Dauer von mindestens 5 Minuten gehalten wird.

16. Verwendung der Körner nach einem der Ansprüche 1 bis 9 und/oder von Körnern, die mittels des Verfahren nach einem der Ansprüche 10 bis 15 erhalten werden, in einem abrasiven Produkt.

17. Verwendung von Körnern nach Anspruch 16,
**dadurch gekennzeichnet,**
**dass** die abrasiven Produkte agglomerierte Produkte oder aufgetragene Produkte sind.
